# EUROPEAN PATENT SPECIFICATION

(11) **EP 2 298 644 B1**
(45) Date of publication and mention of the grant of the patent: **29.05.2013**
(21) Application number: 09170725.7
(22) Date of filing: 18.09.2009
(51) Int. Cl.: B64C 27/605, A63H 27/133

(54) **Helicopter**
Helikopter
Hélicoptère

(43) Date of publication of application: 23.03.2011
(73) Proprietor: Silverlit Toys Manufactory Ltd., Hong Kong (CN)
(72) Inventor: van de Rostyne, Alexander Jozef Magdalena, 2880 Bornem (BE); Wai, Chi Pok Billy, Causeway Bay Hong Kong (CN)
(74) Representative: Sandri, Sandro

(56) References cited:
- EP-A1- 1 462 362
- DE-U1-202007 000 987
- US-A- 3 228 478
- US-A1- 2007 164 150

## Description

### BACKGROUND

The present disclosure concerns an improved flying object such as a helicopter.

The disclosure concerns a helicopter generally. In particular, but not exclusively, it is related to a toy helicopter and in particular to a remote-controlled model helicopter or a toy helicopter.

**Summary**

It is known that a helicopter is a complex machine which is unstable and as a result difficult to control, so that much experience is required to safely operate such helicopters without mishaps.

Document US 2007/0164150 A1 discloses a helicopter including a system to effect motion in a horizontal dimension thereby to direct the desired direction. The helicopter comprises a body, a main rotor with which it is driven by a rotor shaft and which is hinge mounted on this rotor shaft, such that the angle between the plane of rotation of the main rotor and the rotor shaft may vary. It further comprises a control for moving the angle of incidence of the blades of the rotor relative to the angle of incidence of other blades of the rotor cyclically at least along part of a 360 degree rotation path around the rotor shaft, causing a variation in lift force of the blade along at least part of the rotation path and thereby causing the body to be urged in a relatively horizontal direction from a relative position of rest.

According to German Utility Model No. 20 2007 000987, a rotary body arrangement for remote controlled model helicopter has a rotary shaft revolving around a rotary shaft axis at which main rotor blades are engaged around a main rotor blades axis.

Document EP-A1-1462362 discloses a rotor pitch control mechanism for a model helicopter. The mechanism comprises a seesaw, a stabilizer bar attached to said seesaw, a mixing lever pivotally supported by said stabilizer bar, said mixing lever having a first end and a second end, an upper swash lever to which said first end is connected by way of a rod and a main rotor grip to which said second end is connected by way of said rod.

The present disclosure aims to minimize one or several of the above-mentioned and other disadvantages by providing a simple and cheap solution to auto stabilize the helicopter, such that operating the helicopter becomes simpler and possibly reduces the need for long-standing experience of the pilot.

This is achieved by a helicopter having the features disclosed in claim 1. The dependent claims outline preferred forms of embodiment of the present invention.

A helicopter includes a system to effect motion in a horizontal dimension thereby to direct the desired direction, selectively a desired horizontal direction. The rotor blades are driven by and mounted on a rotor shaft, such that the angle between the plane of rotation of the main rotor and the rotor shaft may vary.

A control moves the angle of incidence of at least one blade of the rotor cyclically along a 360 degree rotation path around the vertical rotor shaft, causing a variation in lift force of the blade along the rotation path thereby cause the body to be urged in a relatively horizontal direction from a relative position of horizontal rest. The relative position of horizontal rest is a relatively hovering position above a ground level. By the term, angle of incidence, there is meant the relative angle of attack of the blade in the plane of rotation.

The control includes an actuator for engaging with an assembly depending from the rotor the inter-engagement of the actuator and assembly effecting a change in the angle of incidence of at least the one blade of the rotor.

The control has a control element movable in a first direction such that the control acts to move the angle of incidence in a first direction. The control element is movable in a second direction opposite to the first direction such that the control acts to move the angle of incidence in a second direction opposite to the first direction.

The control element includes an actuator for engaging with a slider element for engagement with an assembly depending from the rotor. The inter-engagement of the actuator and slider element in either of the two directions effects a change in the assembly, and the angle of incidence of at least the one blade of the rotor. There can be other positions with at least one of the actuator being non-interfering with slider, the rotor, or with the control assembly being in a position of rest relative to the actuator, or there can be no command from the actuator to interact with the slider.

**Illustration of drawings**

Figure 1 shows a partial side view of a rotor system with a slider control for a helicopter.

Figure 2 shows a partial perspective top view of a rotor system with a slider control for a helicopter.

Figure 3 shows a partial perspective top different view of a rotor system with a slider control for a helicopter.

Figure 4 shows a partial perspective side view of a rotor system with a slider control for a helicopter.

Figure 5 shows a partial side view of a rotor system with a slider control for a helicopter in a different position of the control and assembly.

Figure 6 shows a partial perspective side view of a portion of a slider control for a helicopter.

Figure 7 shows a partial perspective side view of a different portion of a slider control for a helicopter.

Figure 8 shows a partial perspective side view of a portion of a two slider control for a helicopter.

Figure 9 shows a partial top view of a portion of a two slider control for a helicopter.

**Description of the invention**

A helicopter comprises a body, a main rotor with blades which is driven by a rotor shaft the main rotor being hinge mounted on this rotor shaft such that the angle between the plane of rotation of the main rotor and the rotor shaft may vary.

There is a control for moving the angle of incidence of at least one blade of the rotor relative to the angle of incidence of another blade of the rotor cyclically along at least part of a 360 degree rotation path around the rotor shaft, causing a variation in lift force of the blade along at least part of the rotation path and thereby cause the body to be urged in a relatively horizontal direction from a relative position of rest.

The control has a control element movable in a first direction such that the control acts to move the angle of incidence in a first direction. The control element is movable in a second direction opposite to the first direction such that the control acts to move the angle of incidence in a second direction opposite to the first direction.

The control element includes an actuator for engaging with a slider element for engagement with an assembly depending from the rotor. The inter-engagement of the actuator and slider element in either of the two directions effects a change in the assembly, and the angle of incidence of at least the one blade of the rotor. There can be other positions with at least one of the actuator being non-interfering with slider, the rotor, or with the control assembly being in a position of rest relative to the actuator, or there can be no command from the actuator to interact with the slider.

There can be multiple actuators and multiple sliders. The multiple actuators and multiple sliders are spaced circumferentially around the rotor shaft thereby to interact with the assembly at different circumferential positions relative to the rotor shaft. The interaction occurs when selected actuators are aligned with selected location of the assembly.

The actuator includes an arm movable between a position of repose and a position of inter-engagement with the slider. The degree of movement of and the force exercised by the arm effects the degree of interaction with the slider and in turn the slider with the assembly and the degree of change of angle of inclination of the at least one blade.

The actuator includes an arm movable between a position of repose and a position of inter-engagement with the slider. The length of the arm relative to the length of the assembly from the location of anchoring the rotor to the shaft effects the degree of interaction with the slider and the degree of change of angle of inclination of the at least one blade.

The actuator includes an arm movable between a position of repose and a position of inter-engagement with the slider. The assembly includes a ring transversally located about and movable with the rotor shaft, and the actuator or multiple actuators are located at a fixed location on the body.

Description of a preferred form of embodiment

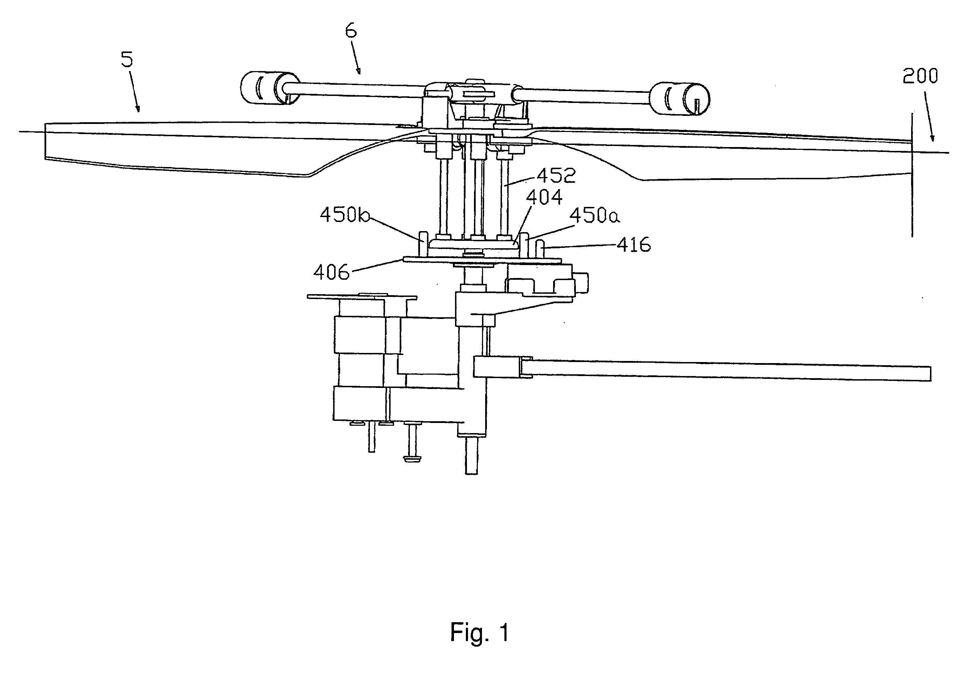

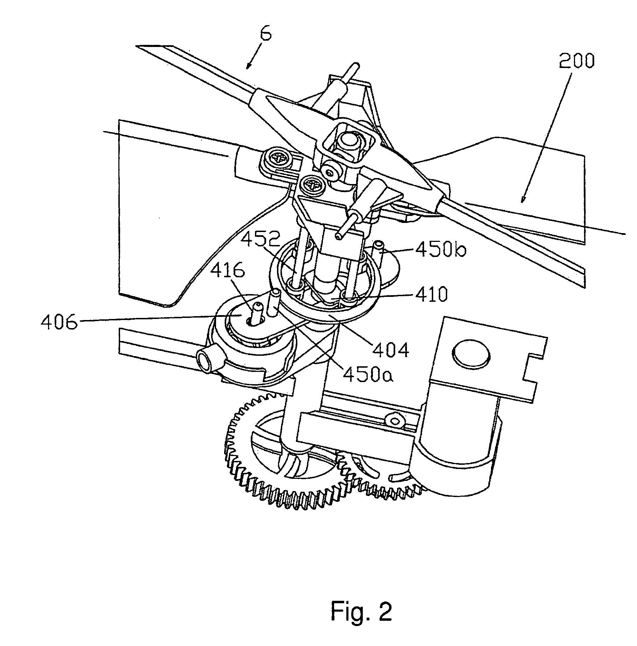

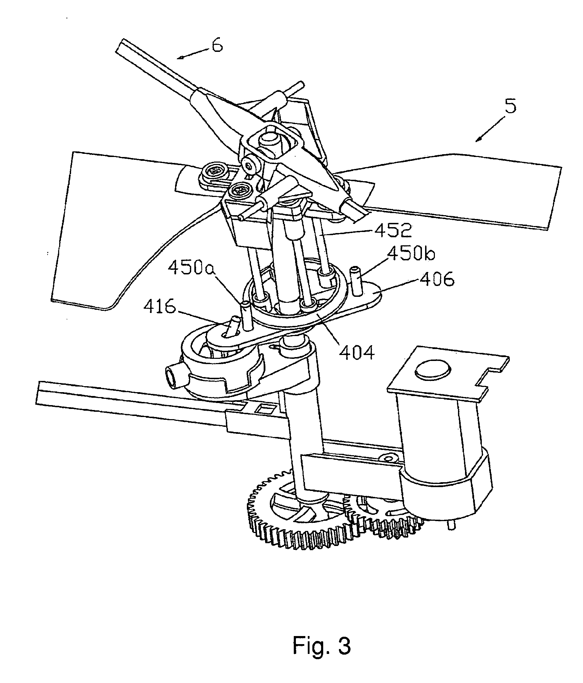

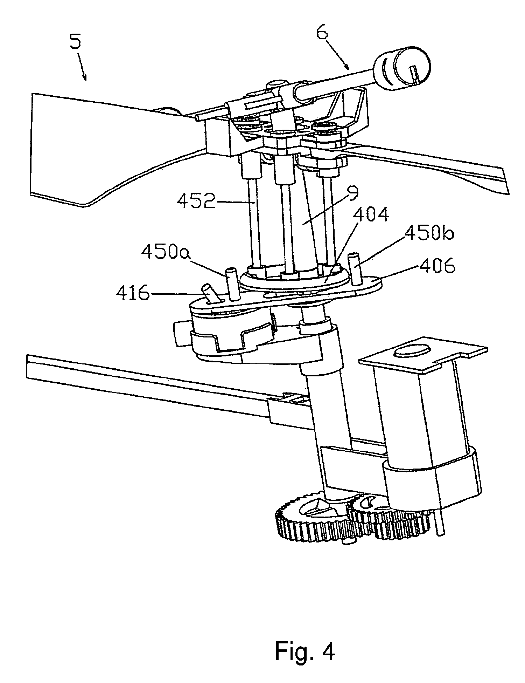

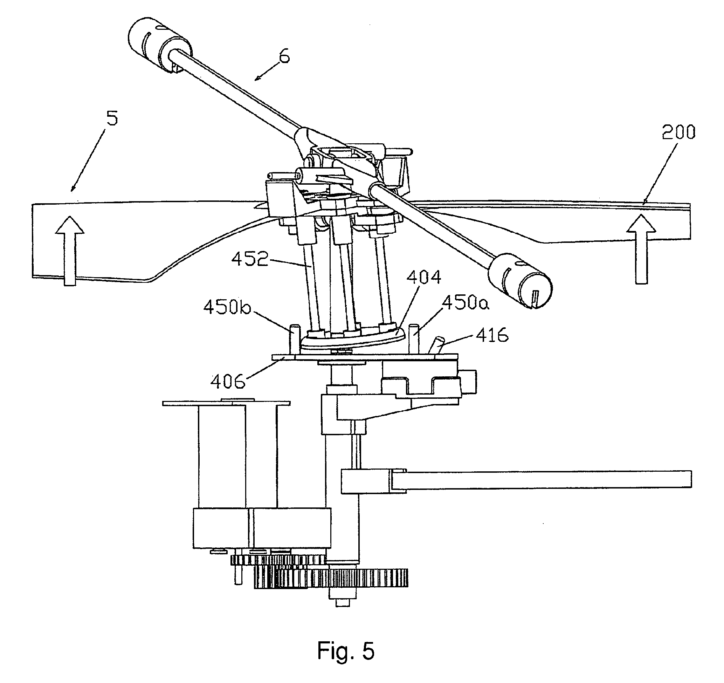

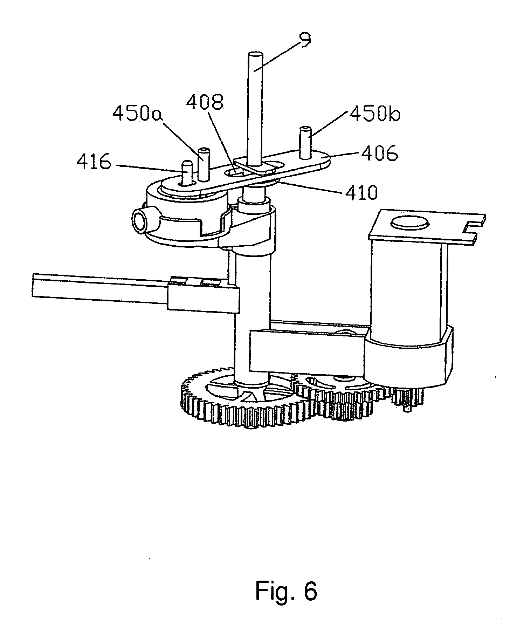

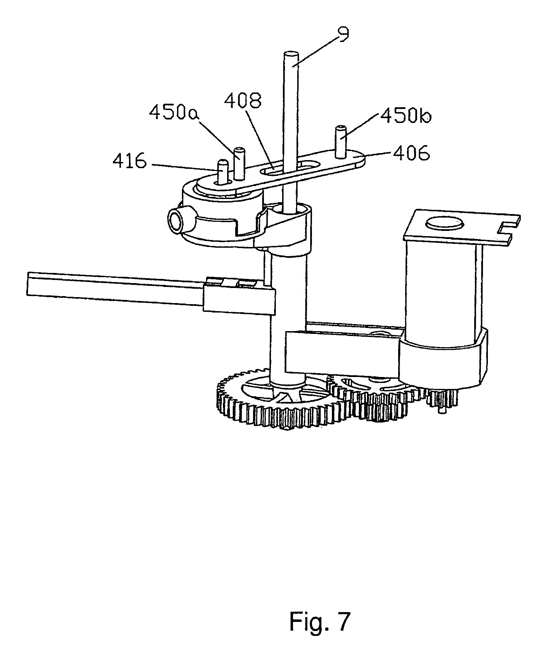

Referring to Figures 1 to 9, a control system for moving a helicopter in a horizontal plane is described. The control system includes a control element that is movable in a first direction such that the control acts to move the angle of incidence in a first direction. The control element is also movable in a second direction opposite to the first direction such that the control acts to move the angle of incidence in a second direction opposite to the first direction.

The control system includes an actuator 416 for engaging with a slider element 406 for engagement with an assembly 452 depending from the rotor 5. The inter-engagement of the actuator 416 and slider element 406 in either of the two directions effect a change in the assembly 452, and the angle of incidence of at least the one blade of the rotor 5. The actuator can also be non-interfering with slider 406 and, resultantly, the rotor such that the control assembly is in a position of rest relative to the actuator. In such an instance, there would be no command from the actuator 416 to interact with the slider 406, the helicopter retains relative stability.

Attached at each end of the slider 406 are actuator pins 450a and 450b. The actuator pins 450a and 450b push on opposites sides of a ring 404 attached to the assembly 452 allowing the ring to be pushed or pulled by a single actuator 416.

When the actuator moves the slider in one direction, the pin 450a pushes the ring and makes the rotor tilt along the rotor hinge axis 200. The cyclical tilt change cause a different lift force in one blade 12 versus the other and the main rotor 5 moves in the horizontal plane.

When the actuator 416 moves the slider 406 in the opposite direction, the pin 450b pushes the ring 404 and causes the main rotor 5 to tilt along the rotor hinge axis 200. This cyclical tilt causes a different lift force in one blade versus the other and the rotor moves in the horizontal plane in the opposite direction from previous slide.

The slider 406 has a slot 408 that allows for the rotor shaft 9 to pass, for guiding the slider while moved by the actuator. There is a guide 410 attached along the vertical rotor axis to keep the slider 406 in a fixed vertical position.

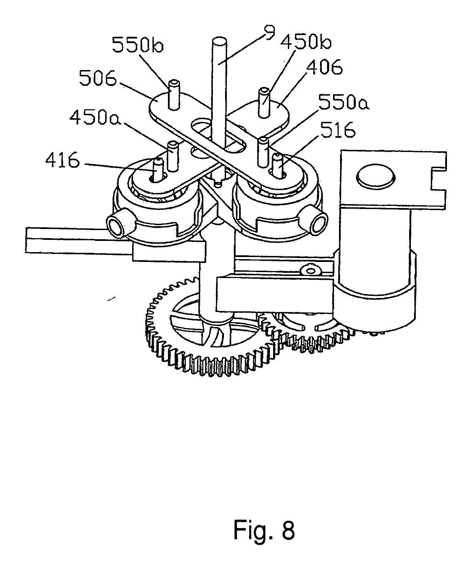

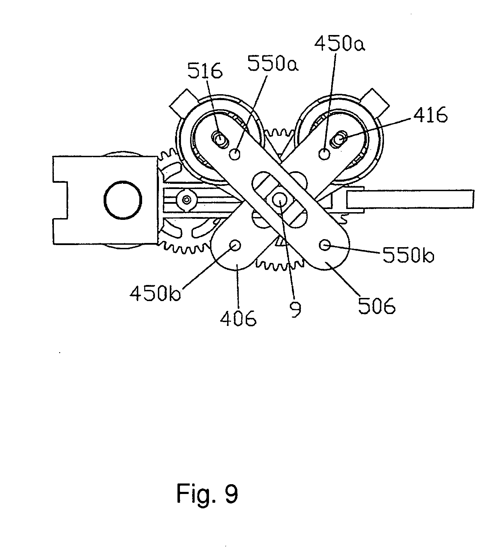

Referring to Figures 8 and 9, two controls could be superimposed at a certain rotation to add a second direction of movement. This allows full control in the horizontal plane - up/down and left/right yaw, it adds for/back and side left/side right control. In this instance, there two actuators 416 and 516 that control movement of two sliders 506 and 406. The sliders 406 and 506 can be positioned at any angle relative to each other, but are illustrated as positioned at 90 degrees.

A helicopter can be made in all sorts of shapes and dimensions while still remaining within the scope of the disclosure. In this sense although the helicopter in some senses has been described as toy or model helicopter, the features described and illustrated can have use in part or whole in a full-scale helicopter. In some cases the helicopter may be a structure without a tail rotor. Different helicopter-type systems can use the control of the disclosure. In other cases the rotor control can be used with different flying objects.

The present disclosure is not limited to the embodiments described as an example and represented in the accompanying figures. Many different variations in size and scope and features are possible, without departing from the scope of the apended claims.

The disclosure has been described and illustrated with a self-stabilizing rotor system. Other non-self stabilizing flying devices could also use the control system of the disclosure.

For instance, instead of electrical motors being provided others forms of motorized power are possible. A different number of blades may be provided to the rotors.

In other forms instead of the mechanical interaction to effect the control a suitable magnetic or electro magnetic servo can be used for instance with a helicopter using the main rotor and also a stabilizer auxiliary rotor.

Although the disclosure has detailed a system for essentially substantial or approximate horizontal movement in one or two directions, the disclosure includes systems for permitting control of the movement in other substantially horizontal directions, without departing from the scope of the appended claims. As such, the helicopter control can affect control of horizontal movement forward and/or backwards and/or sideways to the left and/or sideways to the right or different combinations of those movements.

For this purpose there may be more than the one control system for inter-reacting with the rotor assembly. There could be several control systems operating on the rotor in parallel and/or series manner to effect the desired horizontal movement.

The horizontal movements effected by the control systems are in addition to the up and/or down movements which are possible with the helicopter system with the control being non-operation or on-function on the rotor assembly.

In different cases there can be more than two blades for the rotor, and one or two or more of the blades of the rotor can be controlled to different or the same degree.

## Claims

1. A helicopter comprising a body a main rotor (5) with blades which is driven by a rotor shaft (9), the main rotor being hinge mounted on this rotor shaft (9) by means of a structure (452), such that the angle between the plane of rotation of the main rotor (5) and the rotor shaft (9) may vary; a control for moving the angle of incidence of at least one blade (12) of the rotor (5) relative to the angle of incidence of another blade (12) of the rotor cyclically along at least part of a 360 degree rotation path around the rotor shaft (9), causing a variation in lift force of the blade (12) along at least part of the rotation path and thereby cause the body (2) to be urged in a relatively horizontal direction from a relative position of rest, the control having an actuator (416) movable both in a first direction such that the control acts to move the angle of incidence in a first direction, and in a second direction opposite to the first direction such that the control acts to move the angle of incidence in a second direction opposite to the first direction, **characterized in that** the control includes a slider element (406) for sliding movement transverse to the rotor shaft (9), the slider element being located between an actuator (416) and a structure (452), and wherein said slider element (406) includes a pin (450a, 450b) fixedly mounted on the slider element and extending in a direction transverse to the direction of the sliding action, the pin being for engaging a ring (404) associated with the structure (452), whereby the movement generated in either one of two directions by said slider element (406) through said actuator (416) results in a position change of said structure (452), as well as in a change of the angle of incidence of the blades of the rotor (5).

2. A helicopter according to claim 1 **characterized in that** said actuator (416) of said control has a position in which it does not interfere with said slider element (406), whereby said rotor (5) or said structure (452) are in a position of rest relative to said actuator (416), or there being no command from the actuator (416) to interact with the slider element (406).

3. A helicopter according to claim 1 **characterized in that** it includes multiple actuators (416 and 516) and multiple sliders (406 and 506), the multiple actuators and multiple sliders being spaced circumferentially around the rotor shaft (9) thereby to interact with the structure (452) at different circumferential positions relative to the rotor shaft (9), the interaction occurring when selected actuators are aligned with selected location of the structure (452).

4. A helicopter as claimed in anyone of Claims 1 to 3 **characterized in that** the actuator (416) includes an arm movable between a position of repose and a position of inter-engagement with the slider (406) and **in that** the degree of movement of and the force exercised by the arm effects the degree of interaction with the slider element (406) and in turn the slider element (406) with the structure (452) and the degree of change of angle of inclination of the at least one blade (12).

5. A helicopter as claimed in anyone of Claims 1 to 4 **characterized in that** the actuator (416) includes an arm movable between a position of repose and a position of inter-engagement with the slider (406) and **in that** the length of the arm relative to the length of the assembly structure (452) from the location of anchoring the rotor (5) to the shaft (9) effects the degree of interaction with the slider (406) and the degree of change of angle of inclination of the at least one blade (12).

## Patentansprüche

1. Hubschrauber bestehend aus einem Körper, einem Hauptrotor (5) mit Blättern, die on einer Rotorwelle (9) angetrieben werden, wobei der Hauptrotor an der Rotorwelle (9) mit einer Struktur (452) so anscharniert ist, dass der Winkel zwischen der Rotationsebene des Hauptrotors (5) und der Rotorwelle (9) veränderlich sein kann; einer Steuerung zur zyklischen Bewegung des Inklinationswinkels von mindestens einem Blatt (12) des Rotors (5) in Bezug auf den Inklinationswinkel eines anderen Blatts (12) des Rotors entlang mindestens einem Teil eines 360 Grad-Rotationspfads um die Rotorwelle (9), wodurch eine Veränderung der Hubkraft des Blatts (12) entlang mindestens eines Teils des Rotationspfads eintritt, und wodurch der Körper (2) aus einer relativen Ruhestellung in eine relativ horizontale Richtung gezwungen wird, wobei die Steuerung einen Aktuator (416) aufweist, der sowohl in einer ersten Richtung bewegbar ist, sodass die Steuerung den Inklinationswinkel in eine erste Richtung bringt, als auch in einer zweiten Richtung entgegensetzt der ersten Richtung bewegbar ist, sodass die Steuerung den Inklinationswinkel in eine zweite, der ersten Richtung entgegengesetzte, Richtung bringt,
**dadurch gekennzeichnet,**
**dass** die Steuerung ein Schiebeelement (406) für eine Verschiebebewegung quer zur Rotorwelle (9) aufweist, wobei das Schiebeelement zwischen einem Aktuator (416) und einer Struktur (452) angeordnet ist und das Schiebeelement (406) einen Stift (450a, 450b) aufweist, der starr am Schiebeelement befestigt ist und sich in eine Richtung erstreckt, die quer zur Schieberichtung verläuft, wobei der Stift dazu dient, in einen mit der Struktur (452) verbundenen Ring (404) einzugreifen, wobei die durch das Schiebeelement (406) in eine der beiden Richtungen erzeugte Bewegung durch den Aktuator (416) einen Stellungswechsel der Struktur (452) sowie eine Veränderung des Inklinationswinkels der Blätter des Rotors (5) zur Folge hat.

2. Hubschrauber gemäß Anspruch 1,
**dadurch gekennzeichnet, dass** der Aktuator (416) der Steuerung eine Stellung aufweist, in der er nicht störend in das Schiebeelement (406) eingreift, wobei sich der Rotor (5) oder die Struktur (452) relativ zum Aktuator (416) in Ruhestellung befinden, oder dass kein Befehl vom Aktuator (416) ausgelöst wird, mit dem Schiebeelement (406) zusammenzuwirken.

3. Hubschrauber gemäß Anspruch 1,
**dadurch gekennzeichnet, dass** er mehrfache Aktuatoren (416 und 516) und mehrfache Schieber (406 und 506) aufweist, wobei die mehrfachen Aktuatoren und mehrfachen Schieber um die Peripherie der Rotorwelle (9) verlaufen, um mit der Struktur (452) in verschiedenen relativ zur Rotorwelle (9) peripheren Stellungen zusammenzuwirken, wobei die Zusammenwirkung eintritt, wenn gewählte Aktuatoren mit gewählten Stellen der Struktur (452) ausgerichtet sind.

4. Hubschrauber gemäß einem der Ansprüche 1 bis 3,
**dadurch gekennzeichnet, dass** der Aktuator (416) einen Arm aufweist, der zwischen einer Ruhestellung und einer gemeinsamen Eingreifstellung mit dem Schieber (406) bewegbar ist und dass der Bewegungsgrad des Arms und die von ihm ausgeübte Kraft den Grad der Zusammenwirkung mit dem Schiebeelement (406) und folglich des Schiebeelements (406) mit der Struktur (452) sowie den Veränderungsgrad des Inklinationswinkels von mindestens einem Blatt (12) beeinflusst.

5. Hubschrauber gemäß einem der Ansprüche 1 bis 4,
**dadurch gekennzeichnet, dass** der Aktuator (416) einen Arm aufweist, der zwischen einer Ruhestellung und einer Stellung des Zusammenwirkens mit dem Schieber (406) bewegbar ist, und dass die Länge des Arms relativ zur Länge der Struktur (452) von der Stelle, an welcher der Rotor (5) verankert ist, bis zur Welle (9) den Grad des Zusammenwirkens mit dem Schieber (406) sowie den Veränderungsgrad des Inklinationswinkels von mindestens einem Blatt (12) beeinflusst.

## Revendications

1. Hélicoptère comprenant un corps, un rotor principal (5) doté de pales qui est entraîné par un arbre de rotor (9), le rotor principal étant monté de façon articulée sur cet arbre de rotor (9) au moyen d'une structure (452), de telle sorte que l'angle entre le plan de rotation du rotor principal (5) et l'arbre de rotor (9) peut varier ; une commande destinée à faire varier l'angle d'incidence d'au moins une pale (12) du rotor (5) par rapport à l'angle d'incidence d'une autre pale (12) du rotor de façon cyclique sur au moins une partie d'un chemin de rotation de 360 ° autour de l'arbre de rotor (9), ce qui fait varier la force de sustentation de la pale (12) sur au moins une partie du chemin de rotation et par conséquent pousse le corps (2) dans une direction relativement horizontale par rapport à une position de repos relative, la commande possédant un actionneur (416) mobile à la fois dans une première direction telle que la commande agit pour faire varier l'angle d'incidence dans une première direction, et dans une seconde direction, opposée à la première direction, telle que la commande agit pour faire varier l'angle d'incidence dans une seconde direction opposée à la première direction, **caractérisé en ce que** la commande inclut un élément coulissant (406) destiné à effectuer un moment de coulissement transversalement à l'arbre de rotor (9), l'élément coulissant étant situé entre un actionneur (416) et une structure (452), ledit élément coulissant (406) incluant une tige (450a, 450b) montée de façon fixe sur l'élément coulissant et s'étendant dans une direction transversale à la direction de coulissement, la tige étant destinée à s'engager avec une bague (404) associée à la structure (452), de sorte que le mouvement généré dans l'une ou l'autre des deux directions par ledit élément coulissant (406) via ledit actionneur (416) entraîne un changement de position de ladite structure (452), ainsi qu'un changement d'angle d'incidence des pales du rotor (5).

2. Hélicoptère selon la revendication 1, **caractérisé en ce que** ledit actionneur (416) de ladite commande a une position dans laquelle il n'interfère pas avec ledit élément coulissant (406), de sorte que ledit rotor (5) ou ladite structure (452) sont dans une position de repos par rapport audit actionneur (416), ou bien il n'y a aucune commande de la part de l'actionneur (416) pour interagir avec l'élément coulissant (406).

3. Hélicoptère selon la revendication 1, **caractérisé en ce qu'**il inclut une pluralité d'actionneurs (416 et 516) et une pluralité d'éléments coulissants (406 et 506), la pluralité d'actionneurs et la pluralité d'éléments coulissants étant répartis circonférentiellement autour de l'arbre de rotor (9) de façon à interagir avec la structure (452) en différentes positions circonférentielles par rapport à l'arbre de rotor (9), l'interaction se produisant lorsque des actionneurs sélectionnés sont alignés avec l'emplacement sélectionné de la structure (452).

4. Hélicoptère selon l'une quelconque des revendications 1 à 3, **caractérisé en ce que** l'actionneur (416) inclut un bras mobile entre une position de repos et une position d'engagement mutuel avec l'élément coulissant (406) et **en ce que** le degré de mouvement du bras et la force exercée par celui-ci affecte le degré d'interaction avec l'élément coulissant (406) et en conséquence de l'élément coulissant (406) avec la structure (452) et le degré de variation d'angle d'inclinaison d'au moins une pale (12).

5. Hélicoptère selon l'une quelconque des revendications 1 à 4, **caractérisé en ce que** l'actionneur (416) inclut un bras mobile entre une position de repos et une position d'engagement mutuel avec l'élément coulissant (406) et **en ce que** la longueur du bras par rapport à la longueur de la structure d'ensemble (452) à partir du point d'ancrage du rotor (5) à l'arbre (9) agit sur le degré d'interaction avec l'élément coulissant (406) et le degré de variation d'angle d'inclinaison d'au moins une pale (12).
